# EUROPEAN PATENT SPECIFICATION

(11) **EP 3 119 070 B1**
(45) Date of publication and mention of the grant of the patent: **11.09.2019**
(21) Application number: 16163315.1
(22) Date of filing: 31.03.2016
(51) Int. Cl.: H04M 3/22, H04M 3/436, G10L 15/02, G10L 15/26

(54) **METHOD AND DEVICE FOR DETERMINING A CRANK PHONE NUMBER**
VERFAHREN UND VORRICHTUNG ZUR ERKENNUNG EINER BELÄSTIGENDEN TELEFONNUMMER
PROCÉDÉ ET DISPOSITIF POUR DÉTERMINER UN NUMÉRO DE TÉLÉPHONE EMBÊTANT

(30) Priority: 13.07.2015 CN 201510408711
(43) Date of publication of application: 18.01.2017
(73) Proprietor: Xiaomi Inc., Beijing 100085 (CN)
(72) Inventor: QIN, Qiuping, Beijing 100085 (CN); CHEN, Zhijun, Beijing 100085 (CN); LONG, Fei, Beijing 100085 (CN)
(74) Representative: Sackin, Robert

(56) References cited:
- WO-A1-2007/141247
- JP-A- 2007 266 944
- JP-A- 2010 258 556

## Description

### TECHNICAL FIELD

The present disclosure relates to the field of security technologies, particularly to a method and device for determining a crank phone number.

### BACKGROUND

Generally, crank phone numbers may include a phone number for selling an insurance, a phone number of a real estate agent, and a phone number for a fraud purpose, and these crank phone numbers are disturbing people's normal life over a long period of time.

There is a method for determining a crank phone number in a related technology. In the method, a large number of users determine whether received numbers are crank phone numbers through terminals, and upload determined crank phone numbers to a server, and the server gathers the crank phone numbers determined by the large number of users to generate a list of crank phone numbers.

The embodiments of the present disclosure are presented to solve the problem in the related technology that it is not convenient or rapid to determine a crank phone number among a large number of phone numbers.

The patent applications WO2007/141247A1, JP 2007 266944 A, and JP 2010258556 A disclose methods for identifying spurious telephone calls.

### SUMMARY

A method for determining a crank phone number is provided according to a first aspect. The method includes that:
target call records are obtained from at least one terminal to obtain a call record set, wherein the call record set contains a predetermined number of target call records, each of the target call records contains an unfamiliar number and at least one keyword, the at least one keyword is obtained by the terminal according to text data of call content of a call which is made with the unfamiliar number and is for representing a call topic of the text data of the call content, and the unfamiliar number is a number not stored in a contact list of the terminal corresponding to the unfamiliar number;
N suspicious numbers in the call record set are obtained, wherein the N suspicious numbers are first N unfamiliar numbers among unfamiliar numbers that are contained in the predetermined number of target call records and arranged according to frequencies of appearance in a descending order;
whether a crank feature word recorded in a preset dictionary exists in keywords contained in a target call record of each suspicious number is detected; and
if a crank feature word recorded in the preset dictionary exists in keywords contained in a target call record of any suspicious number, a suspicious number having the crank feature word in a target call record of the suspicious number is determined to be a crank phone number.

The step that a suspicious number having the crank feature word in a target call record of the suspicious number is determined to be a crank phone number includes that:
a target call record set formed by target call records containing a first suspicious phone number is obtained, wherein the first suspicious phone number is any suspicious number having a crank feature word in any target call record of the first suspicious number;
a crank type of a crank feature word contained in each target call record in the target call record set is determined according to correspondence between preset crank feature words and crank types, wherein the crank type indicates a crank purpose of the first suspicious phone number;
the crank type of the crank feature word contained in a call record is determined to be a crank type of the call record;
the number of call records corresponding to each crank type in the target call record set is counted;
according to a ratio of the number of the call records corresponding to the each crank type to the total number of call records in the target call record set, a proportion of the each crank type in the target call record set is determined; and
when a crank type having a proportion larger than a proportion threshold exists in the target call record set, the first suspicious phone number is determined as a crank phone number.

The method disclosed above improves the accuracy of a determined crank phone number.

A device for determining a crank phone number is provided according to claim 2.

In one particular embodiment, the steps of the method for determining a crank phone number are determined by computer program instructions.

Consequently, according to a further aspect, the disclosure is also directed to a computer program for executing the steps of a method for determining a crank phone number as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention, as claimed.

The scope of the present invention is defined by the independent claims below.

### BRIEF DESCRIPTION OF THE DRAWINGS

The accompanying drawings that are needed in the description of the embodiments will be introduced briefly hereinafter so as to describe the embodiments of the present disclosure more clearly. Apparently, the accompanying drawings in the following description only illustrate some embodiments of the present disclosure.
Fig. 1 is a schematic diagram of an implementation environment involved in a method for determining a crank phone number according to each embodiment of the present disclosure;
Fig. 2 is a flowchart of a method for determining a crank phone number according to an exemplary embodiment;
Fig. 3 is a flowchart of another method for determining a crank phone number according to an exemplary embodiment;
Fig. 4-1 is a flowchart of another method for determining a crank phone number according to an exemplary embodiment;
Fig. 4-2 is a flowchart of obtaining a keyword in the method for determining a crank phone number according to Fig. 4-1;
Fig. 4-3 is a flowchart of obtaining a keyword factor in the method for determining a crank phone number according to Fig. 4-1;
Fig. 4-4 is a flowchart of determining a crank phone number in the method for determining a crank phone number according to Fig. 4-1;
Fig. 5-1 is a block diagram of a device for determining a crank phone number according to an exemplary embodiment;
Fig. 5-2 is a block diagram of a determining module in the device for determining a crank phone number as shown in Fig. 5-1;
Fig. 5-3 is a block diagram of another device for determining a crank phone number provided by an embodiment of the present disclosure;
Fig. 6-1 is a block diagram of another device for determining a crank phone number according to an exemplary embodiment;
Fig. 6-2 is a block diagram of a keyword obtaining module in the device for determining a crank phone number as shown in Fig. 6-1;
Fig. 7 is a block diagram of a device for determining a crank phone number according to an exemplary embodiment;
Fig. 8 if a block diagram of a device for determining a crank phone number according to an exemplary embodiment;
Fig. 9 is a block diagram of a system for determining a crank phone number according to an exemplary embodiment; and
Fig. 10 is a block diagram of a system for determining a crank phone number according to an exemplary embodiment.

The accompanying drawings here, which are incorporated into the specification and constitute a part of the specification, illustrate embodiments consistent with the present disclosure and are for explaining the principles of the embodiments of the present disclosure together with the specification.

### DETAILED DESCRIPTION

The embodiments of the present disclosure will be further expounded below with reference to the accompanying drawings so that the purposes, technical solutions and advantages of the embodiments of the present disclosure are clearer. Apparently, the described embodiments are only some embodiments, rather than all embodiments of the present disclosure. The scope of the invention is limited by the appended claims.

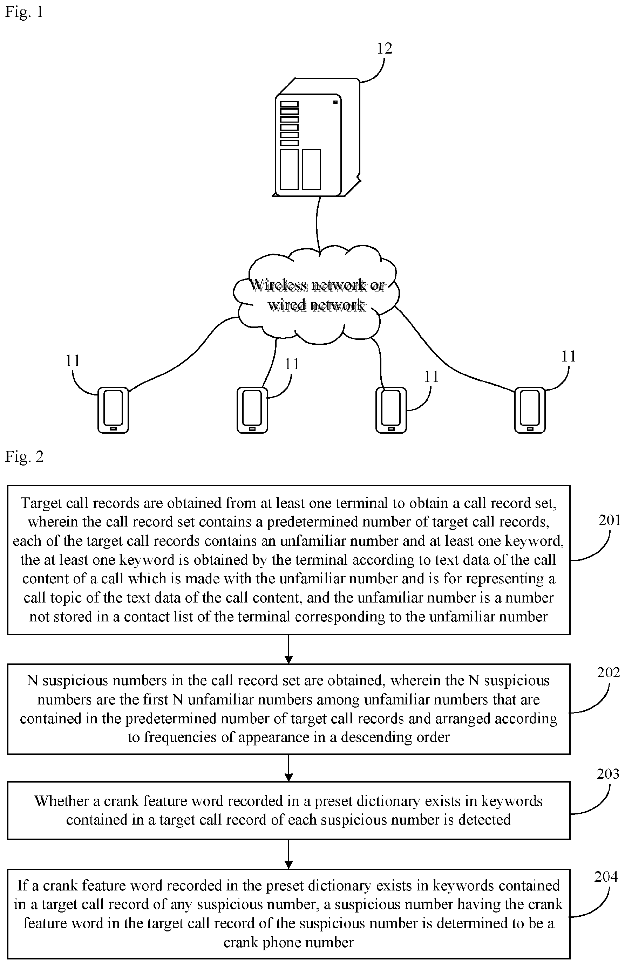

Fig. 1 is a schematic diagram of an implementation environment involved in a method for determining a crank phone number according to each embodiment of the present disclosure. The implementation environment may include a terminal 11 and a server 12.

The terminal 11 may be a mobile phone, a tablet computer, a portable laptop computer, a desktop computer and so on.

The server 12 may be one server, or a server cluster formed by several servers, or a cloud computing service center.

A wired connection or a wireless connection may be established between the terminal 11 and the server 12. Besides, the implementation environment does not limit the number of terminals 11.

Fig. 2 is a flowchart of a method for determining a crank phone number according to an exemplary embodiment. The present embodiment illustrates the crank phone number determining method applied to the server 12 in the implementation environment as shown in Fig. 1. The method for determining a crank phone number may include several steps as follows. A crank phone number is a phone number used for a crank call. A crank call is a phone call made to disturb, annoy or trick someone. Often, crank calls are made anonymously.

Step 201: Target call records are obtained from at least one terminal to obtain a call record set, wherein the call record set contains a predetermined number of target call records, each of the target call records contains an unfamiliar number and at least one keyword, the at least one keyword is obtained by the terminal according to text data of the call content of a call which is made with the unfamiliar number and is for representing a call topic of the text data of the call content, and the unfamiliar number is a number not stored in a contact list of the terminal corresponding to the unfamiliar number.

Step 202: N suspicious numbers in the call record set are obtained, wherein the N suspicious numbers are the first N unfamiliar numbers among unfamiliar numbers that are contained in the predetermined number of target call records and arranged according to frequencies of appearance in a descending order. N is a predetermined number.

Step 203: Whether a crank feature word recorded in a preset dictionary exists in keywords contained in a target call record of each suspicious number is detected.

Step 204: If a crank feature word recorded in the preset dictionary exists in keywords contained in a target call record of any suspicious number, a suspicious number having the crank feature word in the target call record of the suspicious number is determined to be a crank phone number.

To sum up, a method for determining a crank phone number according to an embodiment of the present disclosure determines N unfamiliar numbers with the highest frequencies of appearance in a call record set as suspicious numbers, and further determines a suspicious number having a crank feature word in keywords contained in a target call record of the suspicious number as a crank phone number, wherein the keywords are words representing a call topic, thus a crank phone number among a large number of phone numbers in the call record set is determined conveniently and rapidly, and the effect of improving the efficiency in obtaining the crank phone number is achieved.

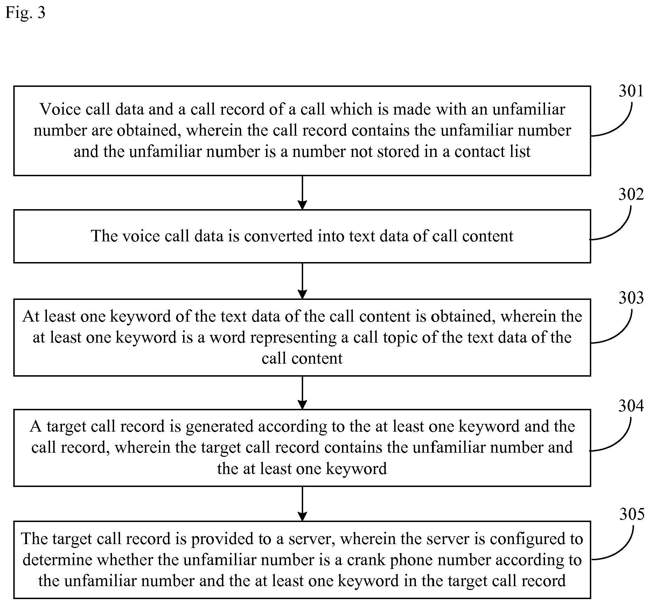

Fig. 3 is a flowchart of another method for determining a crank phone number according to an exemplary embodiment. The present embodiment illustrates the crank phone number determining method applied to the terminal 11 in the implementation environment as shown in Fig. 1. The method for determining a crank phone number may include several steps as follows.

Step 301: Voice call data and a call record of a call which is made with an unfamiliar number are obtained, wherein the call record contains the unfamiliar number and the unfamiliar number is a number not stored in a contact list.

Step 302: The voice call data is converted into text data of call content.

Step 303: At least one keyword of the text data of the call content is obtained, wherein the at least one keyword is a word representing a call topic of the text data of the call content.

Step 304: A target call record is generated according to the at least one keyword and the call record, wherein the target call record contains the unfamiliar number and the at least one keyword.

Step 305: The target call record is provided to a server, wherein the server is configured to determine whether the unfamiliar number is a crank phone number according to the unfamiliar number and the at least one keyword in the target call record.

To sum up, a method for determining a crank phone number according to an embodiment of the present disclosure obtains a target call record containing an unfamiliar number and at least one keyword, and provides the target call record to a server configured to determine whether the unfamiliar number is a crank phone number according to the unfamiliar number and the at least one keyword in the target call record, thereby improving the efficiency in obtaining a crank phone number.

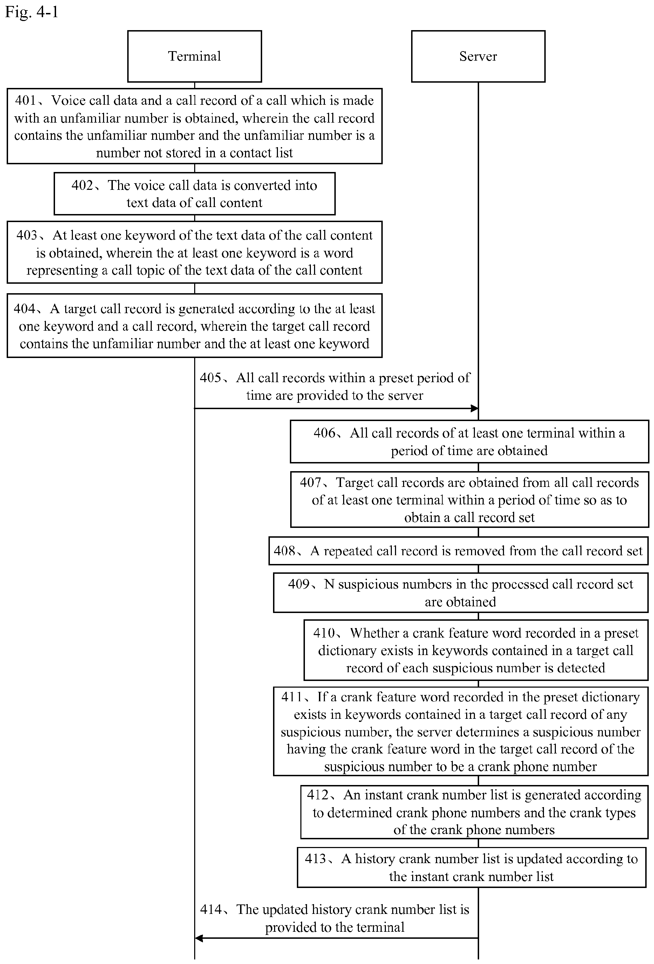

Fig. 4-1 is a flowchart of another method for determining a crank phone number according to an exemplary embodiment. The present embodiment illustrates crank phone number determining method applied in the implementation environment as shown in Fig. 1. The method for determining a crank phone number may include several steps as follows:

Step 401: The terminal obtains voice call data and a call record of a call which is made with an unfamiliar number, wherein the call record contains the unfamiliar number and the unfamiliar number is a number not stored in a contact list.

Each time when starting a call, the terminal may detect whether a phone number of an opposite terminal of the call is an unfamiliar number according to a contact list. When the phone number of the opposite terminal of the call is an unfamiliar number, the terminal may obtain voice call data synchronously and generates a call record. The call record may record the unfamiliar number of the opposite terminal of the call and a phone number of the terminal, or the call record may only record the unfamiliar number of the opposite terminal of the call.

Step 402: The terminal converts the voice call data into text data of call content.

After obtaining the voice call data, the terminal may convert the voice call data into text data of call content in a text format, and the text format may be txt or American Standard Code for Information Interchange (ASCII) and so on.

Exemplarily, the obtained voice call data may be converted into the text data of the call content by automatic speech recognition which may refer to the prior art and will not be described repeatedly in an embodiment of the present disclosure.

Alternatively, this step and step 401 may be performed simultaneously. In other words, the terminal obtains the voice call data of the call between the terminal and the unfamiliar number during the call which is made with the unfamiliar number, and converts the voice data into the text data of the call content in real time. In this way, the terminal may obtain complete text data of the call content when the call ends.

Step 403: The terminal obtains at least one keyword of the text data of the call content, wherein the at least one keyword is a word representing a call topic of the text data of the call content.

After obtaining the text data of the call content, the terminal may analyze the text data of the call content and obtains a word capable of representing a call topic therein. Exemplarily, the obtained text data of the call content is a sentence about a discussion of a certain celebrity, and the keyword obtained by the terminal may be the name of the celebrity.

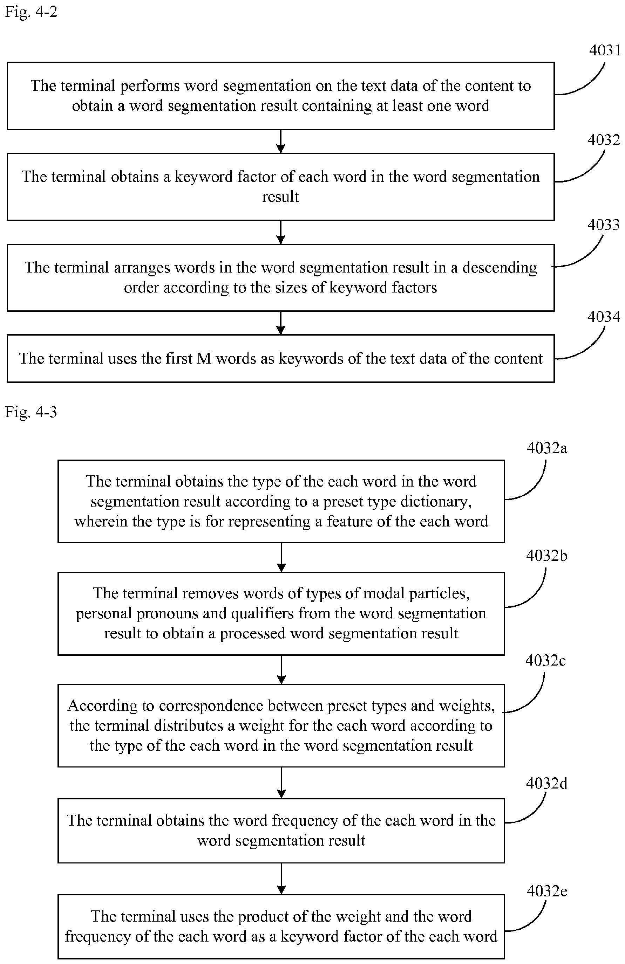

As shown in Fig. 4-2, the steps may be divided into 4 sub-steps as follows.

Sub-step 4031: The terminal performs word segmentation on the text data of the content to obtain a word segmentation result containing at least one word.

Generally, the text data of the call content, obtained by the terminal, includes a plurality of complete sentences, and the terminal needs to perform word segmentation on the text data of the call content first to split the complete sentences contained therein into separate words so as to obtain a keyword therefrom.

Here, the ways of performing the word segmentation may include three major manners, including a word segmentation manner based on dictionary and word library matching, a word segmentation manner based on word frequency statistics and a word segmentation manner based on understanding of knowledge, and each major manner may further include a plurality of word segmentation algorithms. For example, the word segmentation manner based on dictionary and word library matching may include a forward maximum matching method, a reverse maximum matching method, a shortest path word segmentation method, and so on. For another example, the word segmentation manner based on word frequency statistics may include an algorithm of establishing a statistics-based word segmentation model and then performing word segmentation according to the word segmentation model. Alternatively, at least one word segmentation algorithm in the three major word segmentation manners may be selected randomly to perform the word segmentation on the text data of the call content in an embodiment of the present disclosure.

Sub-step 4032: The terminal obtains a keyword factor of each word in the word segmentation result.

After obtaining the word segmentation result of the text data of the call content, the terminal may obtain a keyword factor of each word in the word segmentation result. The keyword factor may be in positive correlation to the topic correlativity of the each word, and the topic correlativity is for indicating the correlativity between a word and the call topic of the text data of the call content. In other words, the larger a keyword factor of a word is, the higher the correlativity of the word to the call topic of the text data of the call content is.

As shown in Fig. 4-3, the present step may include 5 sub-steps as follows.

Sub-step 4032a: The terminal obtains the type of the each word in the word segmentation result according to a preset type dictionary, wherein the type is for representing a feature of the each word.

After obtaining the word segmentation result of the text data of the call content, the terminal may obtain the type of the each word in the word segmentation result according to a preset type dictionary first. The type may be for representing a feature of the each word. Exemplarily, the type may include a crank feature word, a proper noun, a name of a person, a date, a modal particle, a personal pronoun, a qualifier, a place name and so on, and the preset dictionary may record the types of most commonly-used vocabularies.

Sub-step 4032b: The terminal removes words of types of modal particles, personal pronouns and qualifiers from the word segmentation result to obtain a processed word segmentation result.

After obtaining the type of the each word in the word segmentation result, the terminal may remove words of types of modal particles, personal pronouns and qualifiers therein so as to obtain a processed word segmentation result, thus reducing calculation of the terminal in subsequent steps, improving the running speed of the terminal when implementing a method for determining a crank phone number according to an embodiment of the present disclosure.

Here, the words of the types including modal particles, personal pronouns and qualifiers are usually unrelated to the call topic, but may occur frequently. Exemplarily, the modal particles may include oh, ah, Hmmm, Wow, well, and so on; the personal pronouns may include you, I, he and so on; and the qualifiers may include large, high, serious, vivid, beautiful and so on. The removal of these words may improve the accuracy of an obtained keyword without affecting subsequent acquisition of keywords. Besides, the terminal may also remove other types of words that are less correlated with the topic, which is not limited by an embodiment of the present disclosure.

It needs to be noted that the present step is an optional step. In other words, the terminal may also not perform the present step, and performs sub-step 4032c directly after performing sub-step 4032a.

Sub-step 4032c: According to correspondence between preset types and weights, the terminal distributes a weight for the each word according to the type of the each word in the word segmentation result.

After removing the words of the types unrelated to the call topic, the terminal may continue to obtain a keyword factor of each word in the processed word segmentation result. According to correspondence between preset types and weights, the terminal may distribute a weight for the each word according to the type of the each word in the word segmentation result, wherein the correspondence between preset types and weights may be preset according to possible correlativity between types and the call topic. Exemplarily, a highest weight may be set for a word of a crank feature word type, a relatively high weight is set for words of a proper noun type and a person name type and a relatively low weight is set for words of a date type and a place name type. For example, a weight corresponding to a crank feature word is 2, a weight corresponding to a proper noun and a name of a person is 1.5, and a weight corresponding to a date and a place name is 1, and so on.

Sub-step 4032d: The terminal obtains the word frequency of the each word in the word segmentation result.

After distributing the weight for the each word in the word segmentation result, the terminal may obtain the word frequency of the each word in the word segmentation result, wherein the word frequency may be the frequency of appearance of a certain word in the word segmentation result. For example, there are 100 words in the word segmentation result in total, the word "real estate" appears for 12 times, then the word frequency of "real estate" in the word segmentation is 12. Or the word frequency may represent a value obtained by dividing the frequency of appearance of a certain word in the word segmentation result by the total number of words in the word segmentation result. For example, there are 100 words in the word segmentation result in total, the word "real estate" appears for 12 times, then the word frequency of "real estate" in the word segmentation may be 12/100=0.12. It needs to be noted that the word frequency of each word in each word segmentation result may be counted when word segmentation is performed by using a plurality of word segmentation algorithms to obtain a plurality of word segmentation results.

It needs to be noted that the present step may be also performed before sub-step 4032c, or the present step and sub-step 4032c are performed simultaneously, which is not limited by an embodiment of the present disclosure.

Sub-step 4032e: The terminal uses the product of the weight and the word frequency of the each word as a keyword factor of the each word.

After obtaining the weight and the product of the each word, the terminal may use the product of the weight and the frequency as a keyword factor.

Sub-step 4033: The terminal arranges words in the word segmentation result in a descending order according to the sizes of keyword factors.

After obtaining the keyword factor of the each word in the word segmentation result, the terminal may arrange words in the word segmentation result in a descending order according to the sizes of keyword factors. In other words, a word having a larger key factor ranks higher.

It needs to be noted that the terminal may rank words in each word segmentation result respectively, or combine and rank words in a plurality of word segmentation results when performing the word segmentation through a plurality of word segmentation algorithms to obtain a plurality of word segmentation results, which is not limited by an embodiment of the present disclosure.

Sub-step 4034: The terminal uses the first M words as keywords of the text data of the content.

The terminal may use first M words as keywords of the text data of the content. M is a predetermined number.

It needs to be noted that the first M words may be the first M words in each word segmentation result, or the first M words may be the first M words in a combined ranking in the case that the terminal performs the word segmentation through a plurality of word segmentation algorithms to obtain a plurality of word segmentation results, wherein M is a preset value.

Exemplarily, M is 1 and the terminal obtains two word segmentation results F1 and F2 according to two word segmentation algorithms. F1 contains words including "insurance", "see the house" and "congratulations", while the keyword factor of "insurance" is 10, the keyword factor of "see the house" is 12, and the keyword factor of "congratulations" is 8. F2 contains words including "prize", "Zhang San" and "Li Si", while the keyword factor of "prize" is 13, the keyword factor of "Zhang San" is 7 and the keyword factor of "Li Si" is 3.

The words in F1 are arranged in a descending order as follows according to the keyword factors: 1. see the house; 2. insurance; 3. congratulations, and the words in F2 are arranged in a descending order as follows according to the keyword factors: 1. prize; 2. Zhang San; 3. Li Si. The terminal may use the top words in these two rankings, "see the house" and "prize" as keywords.

Whereas the words contained in F1 and F2 are combined and arranged in a descending order as follows according to the sizes of the keyword factors: 1. prize; 2. see the house; 3. insurance; 4. congratulations; 5. Zhang San; 6. Li Si. The terminal may also use "prize" on the top of the combined ranking as a keyword.

It needs to be noted that the terminal may also be provided with a keyword factor threshold. The terminal may use the keyword factor threshold to further perform screening on the first M words, remove words having a keyword factor smaller than the keyword factor threshold from the first M words, and uses the remaining words as keywords, thereby improving the accuracy of a keyword that is determined finally. Or the terminal may further directly use a word having a keyword factor larger than the keyword factor threshold in the word segmentation result as a keyword.

So far, keywords of the text data of the content have been obtained. It needs to be noted that step 402 and step 403 are steps of the terminal obtaining the keywords. These two steps or some sub-steps in these two steps may be also completed by the server, which is not limited by an embodiment of the present disclosure. Exemplarily, the terminal may upload the voice call data or the text data of the call content to the server and keywords therein are obtained by the server.

Step 404: The terminal generates a target call record according to the at least one keyword and a call record, wherein the target call record contains the unfamiliar number and the at least one keyword.

After obtaining the keywords, the terminal may combine the keywords and a call record corresponding to the keywords to obtain a target call record. The target call record contains the unfamiliar number and the at least one keyword. Exemplarily, a keyword may be inserted into a corresponding field in the call record so as to generate the target call record.

Step 405: The terminal provides all call records within a preset period of time to the server.

After obtaining target call records, the terminal may provide all call records within a preset period of time to the server. The all call records may include the target call records and common call records, wherein the common call records are common call records not including a keyword. Exemplarily, the terminal may upload all call records in a month to the server every two month.

Besides, the terminal may only upload the target call records to the server, which is not limited by an embodiment of the present disclosure.

Step 406: The server obtains all call records of at least one terminal within a preset period of time.

The server may obtain all call records of at least one terminal within a preset period of time. Exemplarily, the server may obtain all call records of 1000 terminals in a month, and the server may obtain the call records of the 1000 terminals every two month.

Step 407: The server obtains target call records from all call records of at least one terminal within a period of time so as to obtain a call record set.

When the terminal provides all call records to the server, the server may obtain target call records therein through screening, and forms the target call records into a call record set. Screening methods may include the followings according to different conditions.

1) when the terminal has provided a contact list to the server, the server may screen out call records containing an unfamiliar number according to the contact list, and uses these phone numbers that contains an unfamiliar number as target call records;

2) when the terminal has not provided a contact list to the server, and only provides the call records to the server, the server may determine whether a name is recorded in a call record, and uses a call record without a recorded name as a target call record. It needs to be noted that, when generating a call record, and if the number of an opposite call terminal is the number of a contact recorded in a contact list, the terminal will generally attach the name of the contact in the call record.

Besides, the server may form obtained target call records into a call record set when the terminal only provides the target call records to the server.

Step 408: The terminal removes a repeated call record from the call record set.

Besides an unfamiliar number of an opposite call terminal, a target call record may further record a phone number of a terminal that generates the target call record, wherein the removal of the repeated call record is for discarding a call record in at least two call records of the same type besides a target call record containing most keywords. In other words, when there are a plurality of target call records containing two consistent phone numbers, these target call records may be arranged in a descending order according to the number of contained keywords while the top target call record is kept. The call records of the same type are target call records containing two identical phone numbers and the two numbers are phone numbers of two call parties.

Exemplarily, when target call record A, target call record B and target call record C are call records of the same type, target call record A contains keywords "insurance", "see the house", "congratulation" and "prize", target call record B contains a keyword "Zhang san", and target call record C contains keywords "Li Si" and "investment", these target call records are arranged in a descending order according to the number of the contained keywords.
1. Target call record A (4 keywords).
2. Target call record C (2 keywords).
3. Target call record B (1 keyword).

The server may discard target call record C and target call record B, while keeping target call record A containing the most keywords, thereby improving the accuracy of a crank phone number determined by a method for determining a crank phone number according to an embodiment of the present disclosure.

Step 409: The server obtains N suspicious numbers in the processed call record set.

Here, the N suspicious numbers are the first N unfamiliar numbers among unfamiliar numbers that are contained in a predetermined number of target call records and arranged according to frequencies of appearance in a descending order, and N is a preset value.

Since a caller of crank calls will generally make the calls to a large number of unfamiliar numbers, the server may count the frequency of appearance of each unfamiliar number in the target call records contained in the call record set first after removing the repeated call record from the call record set, arranges all unfamiliar numbers in a descending sequence according to the frequencies of appearance, and determines the first N unfamiliar numbers as suspicious numbers. Since the caller of the crank calls will generally make the calls to a large number of unfamiliar numbers, the number of the caller of the crank calls will appear in the target call records for many times.

Exemplarily, the server obtains the frequencies of appearance of unfamiliar numbers through statistics as follows: unfamiliar number 1 appears for 1000 times, unfamiliar number 2 appears for 900 times, unfamiliar number 3 appears for 800 times, unfamiliar number 4 appears for 1200 times, unfamiliar number 5 appears for 2000 times, and these unfamiliar numbers are arranged in a descending order according to the frequencies of appearance as follows.
1. Unfamiliar number 5
2. Unfamiliar number 4
3. Unfamiliar number 1
4. Unfamiliar number 2
5. Unfamiliar number 3

When N is preset as 3, it may be obtained that suspicious numbers are unfamiliar number 5, unfamiliar number 4 and unfamiliar number 1.

Besides, the server may further set a frequency threshold of appearance, filter out unfamiliar numbers with a smaller frequency of appearance than the frequency threshold of appearance from the first N unfamiliar numbers, and use the remaining unfamiliar numbers as suspicious numbers, thereby improving the accuracy of the suspicious numbers, or the server may directly use unfamiliar numbers with a larger frequency of appearance than the frequency threshold of appearance in the call record set as suspicious numbers.

The present step may further improve the accuracy of a crank phone number determined by a method for determining a crank phone number according to an embodiment of the present disclosure.

It needs to be noted that the server may also determine a suspicious number as a crank phone number, which is not limited in an embodiment of the present disclosure.

Step 410: The server detects whether a crank feature word recorded in a preset dictionary exists in keywords contained in a target call record of each suspicious number.

After obtaining the suspicious numbers, the server may detect, according to a preset dictionary, whether a crank feature word exists in keywords contained in a target call record of each suspicious number, wherein the preset dictionary may record crank feature words. Exemplarily, crank feature words recorded in the preset dictionary may include:
insurance, insurance company, insurance product, risk, investment;
second-hand house, see the house, school district house, owner, new house, change of house;
congratulations, mobile phone number, phone number, lucky draw, win a prize, prize.

The server may detect whether these words exist in keywords contained in a target call record of each suspicious number.

Step 411: If a crank feature word recorded in the preset dictionary exists in keywords contained in a target call record of any suspicious number, the server determines a suspicious number having the crank feature word in the target call record of the suspicious number to be a crank phone number.

After detecting whether each suspicious number has a crank feature word according to the preset dictionary, the server may determine a suspicious number having a crank feature word in a target call record of the suspicious number as a crank phone number. The present step may further improve the accuracy of a determined crank phone number, and reduce the possibility that a normal number (a non-crank phone number) is judged erroneously.

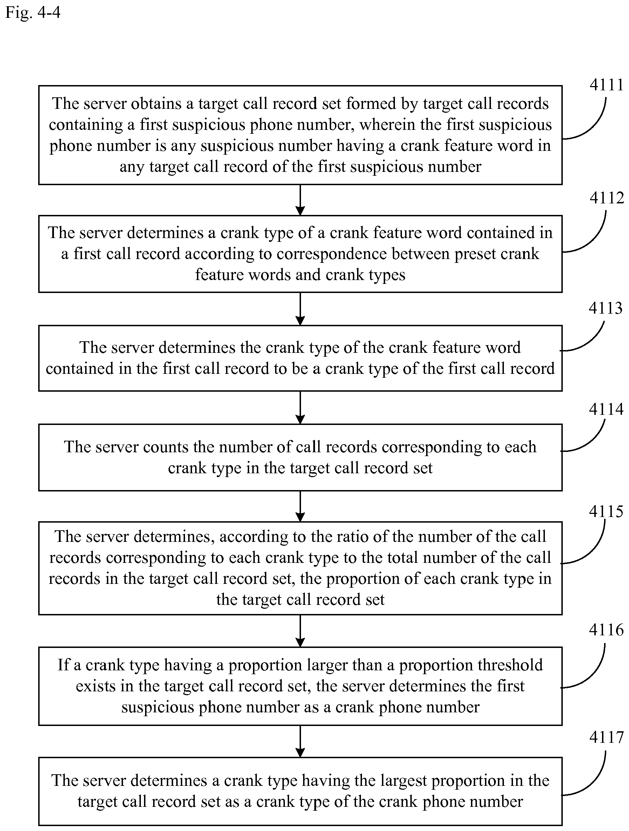

As shown in Fig. 4-4, the present step may include 7 sub-steps as follows.

Sub-step 4111: The server obtains a target call record set formed by target call records containing a first suspicious phone number, wherein the first suspicious phone number is any suspicious number having a crank feature word in any target call record of the first suspicious number.

After detecting whether a crank feature word is contained in target call records of all suspicious numbers, the server may obtain a target call record set formed by target call records containing a first suspicious phone number, wherein the first suspicious phone number is any suspicious number having a crank feature word in any target call record of the first suspicious number. The first suspicious number may appear in a plurality of target call records, and the server may form the target call record set through the plurality of target call records.

Sub-step 4112: The server determines a crank type of a crank feature word contained in a first call record according to correspondence between preset crank feature words and crank types.

Here, the crank type indicates a crank purpose of the first suspicious phone number and the first call record is any call record in the target call record set. In other words, the server determines a crank type of a crank feature word contained in each target call record in the target call record set according to correspondence between preset crank feature words and crank types after obtaining the target call record set. Exemplarily, the correspondence between preset crank feature words and crank types may be as shown in Table 1:

**Table 1**

| Crank type | Crank feature word |
|---|---|
| Promotion | Insurance, insurance company, insurance product, risk, investment; |
| Agent | Second-hand house, see the house, school district house, owner, new house, change of house; |
| Fraud | Congratulations, mobile phone number, phone number, lucky draw, win a prize, prize; |

In Table 1, the first line is a header for describing the two columns in Table 1. The left column represents crank types and the right column represents crank feature words contained in each crank type. The server may determine the crank type of the crank feature word contained in a first call record according to the table. For example, a crank feature word contained in the first call record is "congratulations", then it may be learned from Table 1 that the crank type of "congratulations" is a "fraud" .

Sub-step 4113: The server determines the crank type of the crank feature word contained in the first call record to be a crank type of the first call record.

After obtaining a crank type of a crank feature word contained in each call record in the target call record set, the server may determine the crank type of the crank feature word as a crank type of the call record. Exemplarily, if a call record in the target call record set contains a crank feature word in the type of "fraud", the server may determine a crank type of the call record as a "fraud".

It needs to be noted that, when a call record in the target call record set contains a plurality of crank types of crank feature words, the plurality of crank types may be determined as crank types of the call record. Exemplarily, call record A contains two crank types of crank feature words, "fraud" and "agent", and crank types of call record A include "fraud" and "agent".

Sub-step 4114: The server counts the number of call records corresponding to each crank type in the target call record set.

After obtaining a crank type of each call record in the target call record set, the server may count the number of call records corresponding to each crank type in the target call record set.

Exemplarily, crank types of call record A include "fraud" and "agent", the crank type of call record B is "promotion", and the crank type of call record C is "agent", then a counting result of the server is as follows:

The crank type "agent" corresponds to two call records, call record A and call record B, the crank type "fraud" corresponds to one call record which is call record A, and the crank type "promotion" corresponds to one call record which is call record B.

Sub-step 4115: The server determines, according to the ratio of the number of the call records corresponding to each crank type to the total number of the call records in the target call record set, the proportion of each crank type in the target call record set.

After counting the number of call records corresponding to each crank type in the target call record set, the server may determine, according to the ratio of the number of the call records corresponding to each crank type to the total number of the call records in the target call record set, the proportion of each crank type in the target call record set.

Exemplarily, if the crank type "promotion" in the target call record set corresponds to 60 call records, the crank type "agent" corresponds to 20 call records, and there are 100 call records in the target call record set in total, then the proportion of the crank type "promotion" in the target call record set is 0.6, and the proportion of the crank type "agent" in the target call record set is 0.2.

Step 4116: If a crank type having a proportion larger than a proportion threshold exists in the target call record set, the server determines the first suspicious phone number as a crank phone number.

After obtaining the proportions of the crank types in the target call record set, the server may detect whether a value larger than the proportion threshold exists in these proportions, and if so, determines the first suspicious phone number as a crank phone number. Exemplarily, if the proportion threshold is 0.5, and the proportion of the crank type "promotion" in the target call record set is 0.6 which is larger than the proportion threshold, then the first suspicious phone number corresponding to the target call record set is determined as a crank phone number.

It needs to be noted that, since crank calls of a crank caller have mostly the same content, crank types of crank feature words in a plurality of call records of one crank phone number will be highly similar. In other words, a suspicious number may be screened out according to the proportion threshold, thereby further improving the accuracy of a determined crank phone number.

Sub-step 4117: The server determines a crank type having the largest proportion in the target call record set as a crank type of the crank phone number.

After determining the crank phone number, the server may determine a crank type having the largest proportion in the target call record set corresponding to the crank phone number as a crank type of the crank phone number. The crank type may enable a user to recognize the crank phone number clearly, thereby improving user experience. Exemplarily, if the target call record set contains call records of two crank types "promotion" and "agent", while the proportion of the crank type "promotion" in the target call record set is 0.6, and that of the crank type "agent" in the target call record set is 0.2, then it may be determined that the crank type of the crank phone number is "promotion".

Besides, sub-step 4117 is an optional step, which is a step for classifying crank phone numbers, specifically, the server takes the crank type having the largest proportion in the target call record set as the crank type of the crank phone number.

It needs to be noted that all call records in the target call record set are target call records.

Step 412: The server generates an instant crank number list according to determined crank phone numbers.

After obtaining crank phone numbers, the server may generate an instant crank number list according to the crank phone numbers. Exemplarily, the generated instant crank number list may be as shown in Table 2.

**Table 2**

| Crank phone number |
|---|
| 111***1111 |
| 111***1112 |
| 111***1113 |
| ............ |

In Table 2, the first line is a header for describing the data in Table 2, and the numbers in Table 2 represents the crank phone numbers.

It needs to be noted that the server may further generate an instant crank number list according to both the crank phone numbers and crank types when determining the crank types of the crank phone numbers. In other words, the instant crank number list not only records the crank phone numbers, but also records the crank types of the crank phone numbers, as shown in Fig. 3, exemplarily.

**Table 3**

| Crank phone number | Crank type |
|---|---|
| 111***1111 | Promotion |
| 111***1112 | Agent |
| 111***1113 | Fraud |
| ............ | ............ |

In Table 3, the first line is a header for describing the data of the two columns of Table 3, the left column represents the crank phone numbers and the right column represents the crank type of each crank phone number. For example, the crank type of the crank phone number "111***1111" in the second line is "promotion".

Step 413: The server updates a history crank number list according to the instant crank number list.

After obtaining the instant crank number list, the server may update a history crank number list according to the instant crank number list, wherein the history crank number list may be generated according to an instant crank number list obtained by the server before this time. Besides, in a case that this time refers to that when an instant crank number list is obtained for the first time, the instant crank number list may be used as a history crank number list. When the history crank number list is updated, a timestamp may be attached to each crank phone number to indicate the time when the crank phone number is recorded in the history crank number list. The server may generate an instant crank number list at intervals, and update a history crank number list according to the latest obtained instant crank number list.

It needs to be noted that the timestamp, or known as Unix time, is a manner of time expression, and is defined as the total number of seconds from Greenwich mean time 00:00:00, January 1st, 1970 (Beijing time: 08: 00:00, January 1st, 1970) until now.

The history crank number list may be updated according to three principles as follows in the present step.
1) A crank phone number not existing in the history crank number list, but existing in the instant crank number list is updated in the history crank number list.
2) If a crank phone number exists in the history crank number list and the instant crank number list, a timestamp of the crank phone number in the history crank number list is updated.
3) If a crank phone number exists in the history crank number list, but does not exist in the instant crank number list, the current time is compared with a timestamp of the crank phone number, and if a time difference is larger than a threshold (which may be preset), the crank phone number in the history crank number list is deleted, thereby deleting a crank phone number that has not been used for a long period of time from the history crank number list so as to avoid erroneous judgment caused when the crank phone number changes a user.

After the present step, crank phone numbers recorded in the history crank number list obtained by the server will be highly accurate.

Step 414: The server provides the updated history crank number list to the terminal.

After updating the history crank number list, the server may provide the updated history crank number list to the terminal. Exemplarily, the sever may provide the updated history crank number list to the terminal proactively, or the terminal downloads the updated history crank number list from the server.

After obtaining the updated history crank number list, a user of the terminal may further process a call from a crank phone number according to the crank phone numbers and the crank types of the crank phone numbers recorded therein.

It needs to be noted additionally that a method for determining a crank phone number according to an embodiment of the present disclosure judges whether a word in a word segmentation result is a keyword according to the size of a keyword factor, thereby improving the accuracy of a keyword.

It needs to be noted additionally that a method for determining a crank phone number according to an embodiment of the present disclosure determines N numbers having the highest frequencies of appearance in a target call record as suspicious numbers, thereby improving the accuracy of a crank phone number that is finally determined.

It needs to be noted additionally that a method for determining a crank phone number according to an embodiment of the present disclosure screens out a crank phone number according to the proportion of target call records corresponding to each crank type in a target call record set in the target call record set, thereby further increasing the accuracy of a determined crank phone number.

To sum up, in a method for determining a crank phone number according to an embodiment of the present disclosure, N unfamiliar numbers with the highest frequencies of appearance in a call record set are determined to be suspicious numbers, and a suspicious number having a crank feature word in keywords contained in a target call record of the suspicious number is determined to be a crank phone number, wherein the keywords are words representing a call topic, thus a crank phone number among a large number of phone numbers in the call record set is determined conveniently and rapidly, and the effect of improving the efficiency in obtaining the crank phone number is achieved.

The followings are embodiments of devices of the present disclosure and may be for executing embodiments of methods of the present disclosure. Please refer to the embodiments of the methods of the present disclosure for details not disclosed in the embodiments of the devices of the present disclosure.

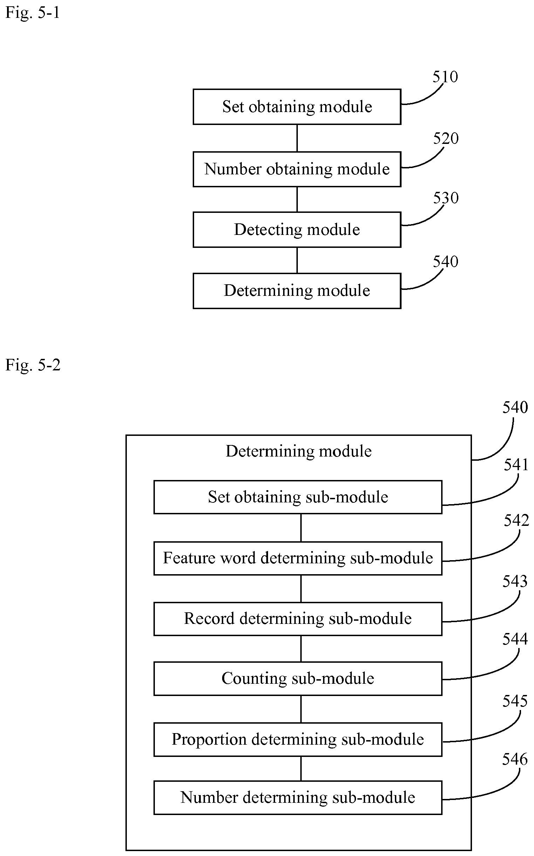

Fig. 5-1 is a block diagram of a device for determining a crank phone number according to an exemplary embodiment. The present embodiment illustrates a crank phone number determining device applied in the server 12 in the implementation environment as shown in Fig. 1. The device for determining a crank phone number may include:
a set obtaining module 510, configured to obtain target call records from at least one terminal to obtain a call record set, wherein the call record set contains a predetermined number of target call records, each of the target call records contains an unfamiliar number and at least one keyword, the at least one keyword is obtained by the terminal according to text data of the call content of a call which is made with the unfamiliar number and is for representing a call topic of the text data of the call content, and the unfamiliar number is a number not stored in a contact list of the terminal corresponding to the unfamiliar number;
a number obtaining module 520, configured to obtain N suspicious numbers in the call record set obtained by the set obtaining module 510, wherein the N suspicious numbers are the first N unfamiliar numbers among unfamiliar numbers that are contained in the predetermined number of target call records and arranged according to frequencies of appearance in a descending order;
a detecting module 530, configured to detect whether a crank feature word recorded in a preset dictionary exists in keywords contained in a target call record of each suspicious number obtained by the number obtaining module 520; and
a determining module 540 configured to determine, if a crank feature word recorded in the preset dictionary exists in keywords contained in a target call record of any suspicious number detected by the detecting module 530, a suspicious number having the crank feature word in the target call record of the suspicious number to be a crank phone number.

To sum up, the device for determining a crank phone number, which is provided by an embodiment of the present disclosure, determines N unfamiliar numbers with the highest frequencies of appearance in a call record set as suspicious numbers, and further determines a suspicious number having a crank feature word in keywords contained in a target call record of the suspicious number as a crank phone number, wherein the keywords are words representing a call topic, thus a crank phone number among a large number of phone numbers in the call record set is determined conveniently and rapidly, and the effect of improving the efficiency in obtaining the crank phone number is achieved.

Fig. 5-2 is a block diagram of the determining module 540 in the device for determining a crank phone number as shown in Fig. 5-1.

Alternatively, the determining 540 module includes:
a set obtaining sub-module 541, configured to obtain a target call record set formed by target call records containing a first suspicious phone number, wherein the first suspicious phone number is any suspicious number having a crank feature word in any target call record of the first suspicious number;
a feature word determining sub-module 542, configured to determine a crank type of a crank feature word contained in a first call record in the target call record set obtained by the set obtaining sub-module 541 according to correspondence between preset crank feature words and crank types, wherein the crank type indicates a crank purpose of the first suspicious phone number and the first call record is any call record in the target call record set;
a record determining sub-module 543, configured to determine the crank type of the crank feature word contained in the first call record determined by the feature word determining sub-module 542 to be a crank type of the first call record;
a counting sub-module 544, configured to count the number of call records corresponding to each crank type in the target call record set determined by the record determining sub-module 543;
a proportion determining sub-module 545 configured to determine, according to the ratio of the counting sub-module 544-counted number of the call records corresponding to each crank type to the total number of the call records in the target call record set, the proportion of each crank type in the target call record set; and
a number determining sub-module 546, configured to determine, when a crank type having a proportion determining sub-module 545-determined proportion larger than a proportion threshold exists in the target call record set, the first suspicious phone number as a crank phone number.

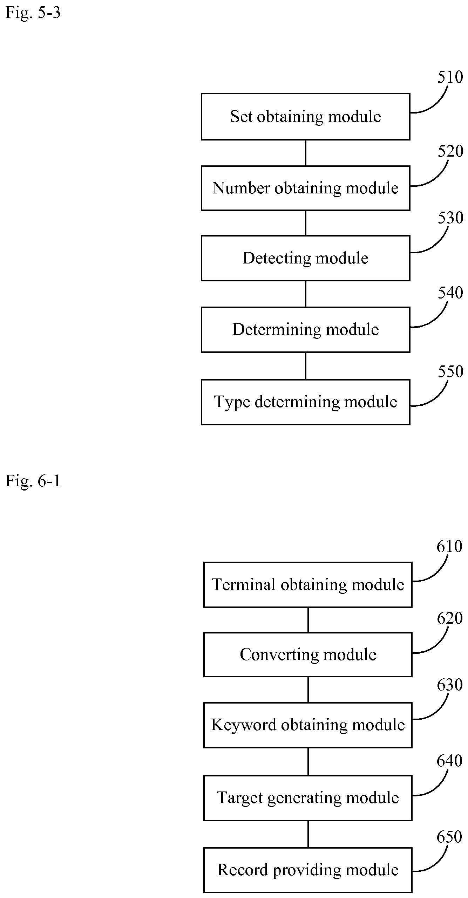

Fig. 5-3 shows a block diagram of another device for determining a crank phone number, provided by an embodiment of the present disclosure.

Alternatively, the device further includes:
a type determining module 550, configured to determine a crank type having the largest proportion, which is determined by the proportion determining sub-module 545, in the target call record set as a crank type of the crank phone number.

Alternatively, each of the target call records contains two phone numbers, and the two phone numbers contain an unfamiliar number,
the number obtaining module 520 is configured to remove a repeated call record from the call record set obtained by the set obtaining module 510, wherein the removal of the repeated call record is for discarding a call record in at least two call records of the same type besides a target call record containing most keywords, and the call records of the same type are target call records containing two identical phone numbers; and configured to obtain N suspicious numbers in the processed call record set.

It needs to be noted additionally that the device for determining a crank phone number, provided by an embodiment of the present disclosure, determines N numbers having the highest frequencies of appearance in a target call record as suspicious numbers, thereby improving the accuracy of a crank phone number that is finally determined.

It needs to be noted additionally that the device for determining a crank phone number, provided by an embodiment of the present disclosure, screens out a crank phone number according to the proportion of target call records corresponding to each crank type in a target call record set in the target call record set, thereby further increasing the accuracy of a determined crank phone number.

To sum up, the device for determining a crank phone number, provided by an embodiment of the present disclosure, determines N unfamiliar numbers with the highest frequencies of appearance in a call record set as suspicious numbers, and further determines a suspicious number having a crank feature word in keywords contained in a target call record of the suspicious number as a crank phone number, wherein the keywords are words representing a call topic, thus a crank phone number in a large number of phone numbers in the call record set is determined conveniently and rapidly, and the effect of improving the efficiency in obtaining the crank phone number is achieved.

The devices for determining a crank phone number, as shown in Fig. 5-1 and Fig. 5-3, are configured to execute the flows of the methods as shown in Fig. 2 and Fig. 4-1.

The determining module as shown in Fig. 5-2 is configured to execute the flow of the method as shown in Fig. 4-4.

Fig. 6-1 is a block diagram of another device for determining a crank phone number according to an exemplary embodiment. The present embodiment illustrates the crank phone number determining device applied in the terminal 11 in the implementation environment as shown in Fig. 1. The crank phone number determining device may include:
a terminal obtaining module 610, configured to obtain voice call data and a call record of a call which is made with an unfamiliar number, wherein the call record contains the unfamiliar number and the unfamiliar number is a number not stored in a contact list;
a converting module 620, configured to convert the voice call data obtained by the terminal obtaining module 610 into text data of call content;
a keyword obtaining module 630, configured to obtain at least one keyword of the text data of the call content obtained by the converting module 620, wherein the at least one keyword is a word representing a call topic of the text data of the call content;
a target generating module 640, configured to generate a target call record according to the at least one keyword obtained by the keyword obtaining module 630 and the call record, wherein the target call record contains the unfamiliar number and the at least one keyword;
a record providing module 650, configured to provide the target call record generated by the target generating module 640 to a server, wherein the server is configured to determine whether the unfamiliar number is a crank phone number according to the unfamiliar number and the at least one keyword in the target call record.

To sum up, the crank phone number determining device provided by an embodiment of the present disclosure obtains a target call record containing an unfamiliar number and at least one keyword, and provides the target call record to a server configured to determine whether the unfamiliar number is a crank phone number according to the unfamiliar number and the at least one keyword in the target call record, thereby improving the efficiency in obtaining a crank phone number.

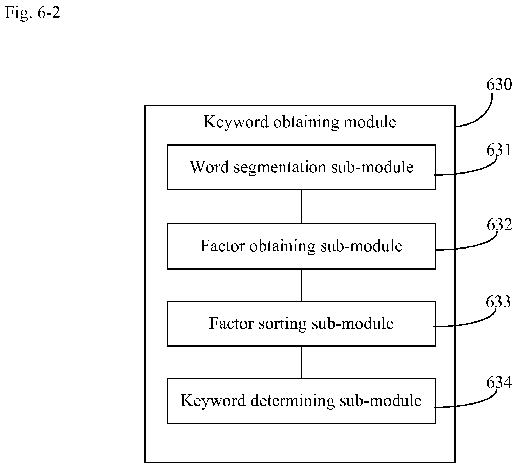

Fig. 6-2 is a block diagram of the keyword obtaining module 630 in the crank phone number determining device as shown in Fig. 6-1. The keyword obtaining module 630 includes:
a word segmentation sub-module 631, configured to perform word segmentation on the text data of the content to obtain a word segmentation result containing at least one word;
a factor obtaining sub-module 632, configured to obtain a keyword factor of each word in the word segmentation result obtained by the word segmentation sub-module 631, wherein the keyword factor is in positive correlation to the topic correlativity of the each word, and the topic correlativity of the each word is for indicating the correlativity between the each word and the call topic of the text data of the call content;
a factor sorting sub-module 633, configured to arrange words in the word segmentation result in a descending order according to the size of the keyword factor obtained by the factor obtaining sub-module 632;
a keyword determining sub-module 634, configured to use the first M words arranged by the factor sorting sub-module 633 as keywords of the text data of the content.

Alternatively, the factor obtaining sub-module 632 is configured to obtain the type of the each word in the word segmentation sub-module 631-obtained word segmentation result according to a preset type dictionary, wherein the type is for representing a feature of the each word; according to correspondence between preset types and weights, distribute a weight for the each word according to the type of the each word in the word segmentation result; obtain the word frequency of the each word in the word segmentation result; and use the product of the weight and the word frequency of the each word as the keyword factor of the each word.

Alternatively, the factor obtaining sub-module 632 is configured to remove words of types of modal particles, personal pronouns and qualifiers from the word segmentation result obtained by the word segmentation sub-module 631 to obtain a processed word segmentation result; and obtain a keyword factor of each word in the processed word segmentation result.

It needs to be noted additionally that the crank phone number determining device provided by an embodiment of the present disclosure judges whether a word in a word segmentation result is a keyword according to the size of a keyword factor, thereby improving the accuracy of a keyword.

To sum up, the crank phone number determining device provided by an embodiment of the present disclosure obtains a target call record containing an unfamiliar number and at least one keyword, and provides the target call record to a server configured to determine whether the unfamiliar number is a crank phone number according to the unfamiliar number and the at least one keyword in the target call record, thereby improving the efficiency in obtaining a crank phone number.

The crank phone number determining device as shown in Fig. 6-1 is configured to execute the flow of the method as shown in Fig. 3.

The keyword obtaining module as shown in Fig. 6-2 is configured to execute the flow of the method as shown in Fig. 4-2.

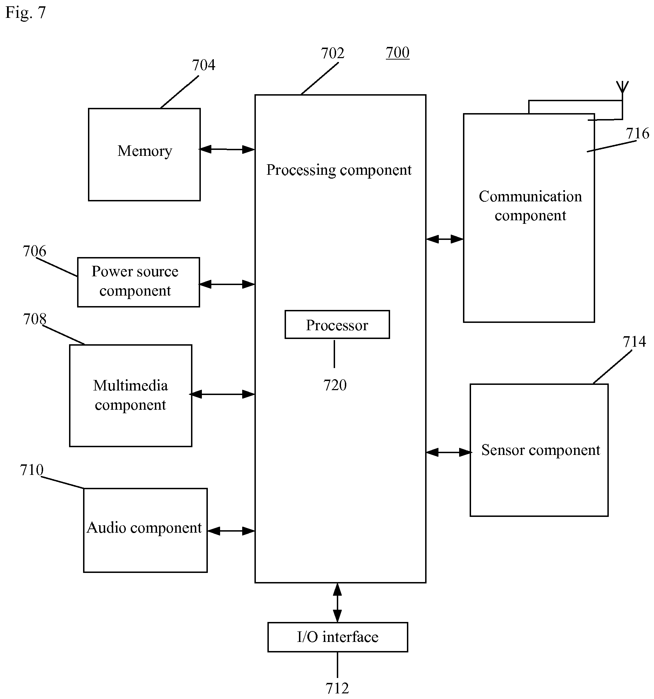

Fig. 7 is a block diagram of a device 700 for determining a crank phone number according to an exemplary embodiment. For example, the device 700 may be a mobile phone, a computer, a digital broadcasting terminal, a message transceiver, a game console, a tablet device, a medical device, a fitness device, a personal digital assistant and so on.

Referring to Fig. 7, the device 700 may include one or more of the following components: a processing component 702, a memory 704, a power source component 706, a multimedia component 708, an audio component 710, an Input/Output (I/O) interface 712, a sensor component 714 and a communication component 716.

Generally, the processing component 702 controls overall operations of the device 700, such as operations associated with display, a telephone call, data communication, a camera operation and a recording operation. The processing component 702 may include one or more processors 720 to execute instructions so as to complete all or part of the steps of the method. Besides, the processing component 702 may include one or more modules, so as to process interaction between the processing component 702 and other components. For example, the processing component 702 may include a multimedia module so as to facilitate interaction between the multimedia component 708 and the processing component 702.

The memory 704 is configured to store various types of data so as to support operations in the device 700. Examples of these data include an instruction of any application or method operated on the device 700, contact data, data of a telephone directory, a message, a picture, a video and so on. The memory 704 may be implemented by a volatile or non-volatile storage device of any type or a combination thereof, such as a Static Random-Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk.

The power source component 706 provides power for various components of the device 700. The power source component 706 may include a power source management system, one or more power sources, and other components associated with power generation, management and distribution of the device 700.

The multimedia component 708 includes a screen providing an output interface between the device 700 and a user. In some embodiments, the screen may include a Liquid Crystal Display (LCD) and a Touch Panel (TP). If the screen includes the TP, the screen may be implemented as a touch screen to receive an input signal from the user. The touch panel includes one or more touch sensors so as to sense a touch, a slide, and a gesture on the TP. The touch sensor may not only sense a touch or a boundary of a slide, but also detect a duration and a pressure related to the touch or the slide. In some embodiments, the multimedia component 708 includes a front camera and/or a rear camera. When the device 700 is in an operation mode, such as a camera mode or a video mode, the front camera and/or the rear camera may receive external multimedia data. Each front camera and each rear camera may be a fixed optical lens system or may be provided with a focal distance or an optical zooming capability.

The audio component 710 is configured to output and/or input an audio signal. For example, the audio component 710 includes a Microphone (MIC). When the device 700 is in an operation mode, such as a calling mode, a recording mode and a voice recognition mode, the MIC is configured to receive an external audio signal. The received audio signal may be further stored in the memory 704 or sent by the communication component 716. In some embodiments, the audio component 710 further includes a loudspeaker, configured to output the audio signal.

The I/O interface 712 provides an interface between the processing component 702 and a peripheral interface module. The peripheral interface module may be a keyboard, a click wheel, a button and so on. These buttons may include, but are not limited to a homepage button, a volume button, a start button and a lock button.

The sensor component 714 includes one or more sensors configured to provide evaluation of states of various aspects for the device 700. For example, the sensor component 714 may detect an on/off state of the device 700, and the relative locations of the components. For example, the components are a display and a keypad of the device 700. The sensor component 714 may further detect a change of the location of the device 700 or a change of the location of a component of the device 700, the existence of a contact between the user and the device 700, the position or acceleration/deceleration of the device 700 and a change in the temperature of the device 700. The sensor component 714 may include a proximity sensor, configured to detect the existence of a nearby object when there is no any physical contact. The sensor component 714 may further include an optical sensor, such as a Complementary Metal Oxide Semiconductor (CMOS) or Charge Coupled Device (CCD) image sensor used in an imaging application. In some embodiments, the sensor component 714 may further include an acceleration sensor, a gyro sensor, a magnetic sensor, a pressure sensor or a temperature sensor.

The communication component 716 is configured to facilitate wired or wireless communication between the device 700 and other devices. The device 700 may access a wireless network based on a communication standard, such as Wireless Fidelity (WiFi), the second Generation (2G) or the third Generation (3G), or a combination thereof. In an exemplary embodiment, the communication component 716 receives a broadcast signal from an external broadcast management system or broadcast related information through a broadcast channel. In an exemplary embodiment, the communication component 716 further includes a Near Field Communication (NFC) module so as to promote short distance communication. For example, the NFC module may be implemented based on a Radio-frequency Identification (RFID) technology, an Infrared Data Association (IrDA) technology, an Ultra Wide Band (UWB) technology, a Bluetooth (BT) technology and other technologies.

In an exemplary embodiment, the device 700 may be implemented by one or more Application Specific Integrated Circuits (ASIC), Digital Signal Processors (DSP), Digital Signal Processing Devices (DSPD), Programmable Logic Devices (PLD), Field Programmable Gate Arrays (FPGA), controllers, microcontrollers, microprocessors, or other electronic components, so as to execute the method above.

A non-temporary computer readable storage medium including instructions is further provided in an exemplary embodiment, such as a memory 704 including instructions. The instructions may be executed by the processor 720 of the device 700 so as to complete the method above. For example, the non-temporary computer readable storage medium may be a ROM, a Random-Access Memory (RAM), a Compact Disc-ROM (CD-ROM), a magnetic tape, a floppy disk, an optical data memory and so on.

A non-temporary computer readable storage medium enables the device 700 to execute a crank phone number determining method provided by each embodiment above when instructions in the storage medium are executed by a processor of the device.

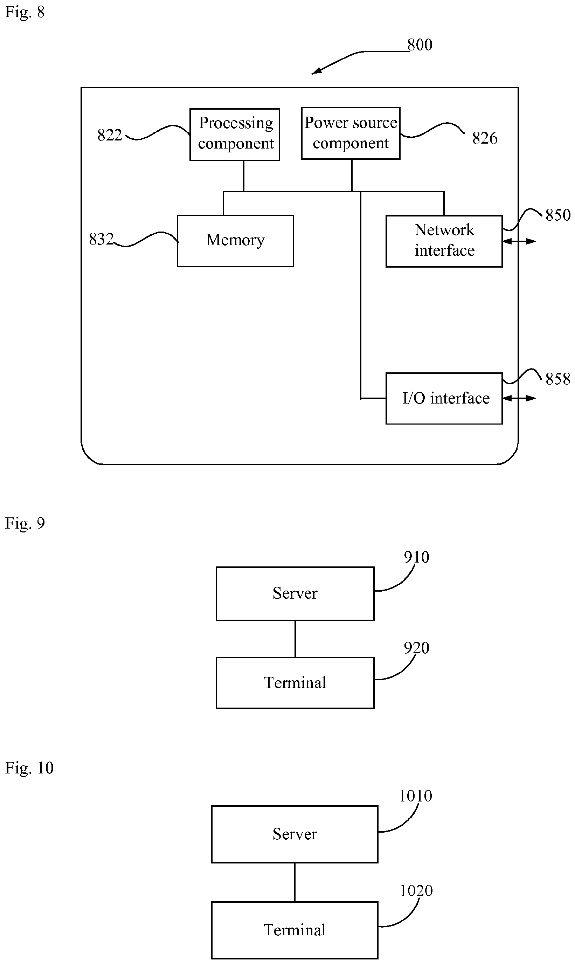

Fig. 8 is a block diagram of a device 800 for determining a crank phone number according to an exemplary embodiment. For example, the device 800 may be provided as a server. Referring to Fig. 8, the device 800 includes a processing component 822 which further includes one or more processors and a memory resource that is represented by a memory 832 and configured to store instructions executable by the processing component 822, such as an application. The application stored in the memory 832 may include one or more modules, each of which corresponds to a group of instructions. Besides, the processing component 822 is configured to execute instruction so as to execute the crank phone number determining method.

The device 800 may further include a power source component 826 configured to execute power source management of the device 800, a wired or wireless network interface 850 configured to connect the device 800 to a network, and an I/O interface 858. The device may be operated based an operating system stored in the memory 832, such as Windows ServerTM, Mac OS XTM, UnixTM, LinuxTM, FreeBSDTM and the like.

Fig. 9 is a block diagram of a system for determining a crank phone number according to an exemplary embodiment. The system includes a server 910 and a terminal 920.

The server 910 may include the crank phone number determining device as shown in Fig. 5-1 or the crank phone number determining device as shown in Fig. 5-3.

The terminal 920 may include the crank phone number determining device as shown in Fig. 6-1.

Fig. 10 is a block diagram of a system for determining a crank phone number according to an exemplary embodiment. The system includes a server 1010 and a terminal 1020.

The server 1010 may include the crank phone number determining device as shown in Fig. 8.

The terminal 1020 may include the crank phone number determining device as shown in Fig. 7.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

It is to be understood that the embodiments of the present disclosure are not limited to the precise structures that have been described above or illustrated in the accompanying drawings, and various modifications and changes may be made. The scope of the embodiments of the present disclosure is limited by the appended claims.

### INDUSTRY APPLICABILITY

According to the embodiments of the present disclosure, N unfamiliar numbers with the highest frequencies of appearance in a call record set are determined to be suspicious numbers, and a suspicious number having a crank feature word in keywords contained in a target call record of the suspicious number is determined to be a crank phone number, wherein the keywords are words representing a call topic, thus a crank phone number among a large number of phone numbers in the call record set is determined conveniently and rapidly, and the effect of improving the efficiency in obtaining the crank phone number is achieved.

## Claims

1. A method for determining a crank phone number, comprising:
obtaining target call records from at least one terminal to obtain a call record set, wherein the call record set contains a predetermined number of target call records, each of the target call records contains an unfamiliar number and at least one keyword, the at least one keyword is obtained by the terminal according to text data of call content of a call with the unfamiliar number and is for representing a call topic of the text data of the call content, and the unfamiliar number is a number not stored in a contact list of the terminal corresponding to the unfamiliar number (201), wherein the predetermined number of target call records comprises a plurality of target call records;
obtaining N suspicious numbers in the call record set, wherein the N suspicious numbers are first N unfamiliar numbers among unfamiliar numbers that are contained in the predetermined number of target call records and arranged according to frequencies of appearance in a descending order (202);
detecting whether a crank feature word recorded in a preset dictionary exists in keywords contained in a target call record of each suspicious number (203); and
if a crank feature word recorded in the preset dictionary exists in keywords contained in a target call record of any suspicious number, determining a suspicious number having the crank feature word in a target call record of the suspicious number to be a crank phone number (204),
**characterized in, that**
the determining a suspicious number having the crank feature word in a target call record of the suspicious number to be a crank phone number comprises:
obtaining a target call record set formed by target call records containing a first suspicious phone number, wherein the first suspicious phone number is any suspicious number having a crank feature word in any target call record of the first suspicious number (4111);
determining a crank type of a crank feature word contained in each target call record in the target call record set (4112) according to correspondence between preset crank feature words and crank types, wherein the crank type indicates a crank purpose of the first suspicious phone number;
determining the crank type of the crank feature word contained in a call record to be a crank type of the call record (4113);
counting the number of call records corresponding to each crank type in the target call record set (4114);
according to a ratio of the number of the call records corresponding to the each crank type to the total number of call records in the target call record set, determining a proportion of the each crank type in the target call record set (4115); and
when a crank type having a proportion larger than a proportion threshold exists in the target call record set, determining the first suspicious phone number as a crank phone number (4116).

2. A device for determining a crank phone number, comprising:
a set obtaining module (510), configured to obtain target call records from at least one terminal to obtain a call record set, wherein the call record set contains a predetermined number of target call records, each of the target call records contains an unfamiliar number and at least one keyword, the at least one keyword is obtained by the terminal according to text data of call content of a call which is made with the unfamiliar number and is for representing a call topic of the text data of the call content, and the unfamiliar number is a number not stored in a contact list of the terminal corresponding to the unfamiliar number, wherein the predetermined number of target call records comprises a plurality of target call records;
a number obtaining module (520), configured to obtain N suspicious numbers in the call record set, wherein the N suspicious numbers are first N unfamiliar numbers among unfamiliar numbers that are contained in the predetermined number of target call records and arranged according to frequencies of appearance in a descending order;
a detecting module (530), configured to detect whether a crank feature word recorded in a preset dictionary exists in keywords contained in a target call record of each suspicious number; and
a determining module (540) configured to determine, if a crank feature word recorded in the preset dictionary exists in keywords contained in a target call record of any suspicious number, a suspicious number having the crank feature word in a target call record of the suspicious number to be a crank phone number wherein the determining module (540) is **characterized by**:
a set obtaining sub-module (541), configured to obtain a target call record set formed by target call records containing a first suspicious phone number, wherein the first suspicious phone number is any suspicious number having a crank feature word in any target call record of the first suspicious number;
a feature word determining sub-module (542), configured to determine a crank type of a crank feature word contained in each target call record in the target call record set according to correspondence between preset crank feature words and crank types, wherein the crank type indicates a crank purpose of the first suspicious phone number ;
a record determining sub-module (543), configured to determine the crank type of the crank feature word contained in a call record to be a crank type of the call record;
a counting sub-module (544), configured to count the number of call records corresponding to each crank type in the target call record set;
a proportion determining sub-module (545), configured to determine a proportion of the each crank type in the target call record set according to a ratio of the number of the call records corresponding to the each crank type to the total number of call records in the target call record set; and
a number determining sub-module (546), configured to determine the first suspicious phone number as a crank phone number when a crank type having a proportion larger than a proportion threshold exists in the target call record set.

3. A computer program including instructions for executing the steps of the method for determining a crank phone number according to claim 1 when said program is executed by a computer.

4. A recording medium readable by a computer and having recorded thereon a computer program including instructions for executing the steps of the method for determining a crank phone number according to claim 1.

## Patentansprüche

1. Verfahren zum Bestimmen der Telefonnummer eines lästigen Anrufs, das Folgendes aufweist:
Erhalten von Zielanrufdatensätzen von wenigstens einem Endgerät, um eine Anrufdatensatzgruppe zu erhalten, wobei die Anrufdatensatzgruppe eine vorbestimmte Anzahl von Zielanrufdatensätzen enthält, wobei die Zielanrufdatensätze jeweils eine unbekannte Nummer und wenigstens ein Schlüsselwort enthalten, wobei das wenigstens eine Schlüsselwort durch das Endgerät gemäß Textdaten von Anrufinhalt eines Anrufs mit der unbekannten Nummer erhalten wird und zum Repräsentieren eines Anrufsthemas der Textdaten des Anrufinhalts ist und wobei die unbekannte Nummer eine Nummer ist, die nicht in einer Kontaktliste des Endgeräts gespeichert ist, das der unbekannten Nummer (201) entspricht, wobei die vorbestimmte Anzahl von Zielanrufdatensätzen mehrere Zielanrufdatensätze aufweist;
Erhalten N verdächtiger Nummern in der Anrufdatensatzgruppe, wobei die N verdächtigen Nummern erste N unbekannte Nummern unter unbekannten Nummern sind, die in der vorbestimmten Anzahl von Zielanrufdatensätzen enthalten und gemäß Auftauchhäufigkeit in absteigender Reihenfolge angeordnet sind, (202);
Erkennen, ob es in Schlüsselwörtern, die in einem Zielanrufdatensatz jeder verdächtigen Nummer enthalten sind, ein Merkmalswort eines lästigen Anrufs gibt, das in einem voreingestellten Wörterbuch aufgezeichnet ist, (203); und,
falls es in Schlüsselwörtern, die in einem Zielanrufdatensatz einer verdächtigen Nummer enthalten sind, ein Merkmalswort eines lästigen Anrufs gibt, das in dem voreingestellten Wörterbuch aufgezeichnet ist, Bestimmen, dass eine verdächtige Nummer, die das Merkmalswort eines lästigen Anrufs in einem Zielanrufdatensatz der verdächtigen Nummer hat, eine Telefonnummer eines lästigen Anrufs ist, (204),
**dadurch gekennzeichnet, dass**
das Bestimmen einer verdächtigen Nummer, die in einem Zielanrufdatensatz der verdächtigen Nummer das Merkmalswort eines lästigen Anrufs hat, als eine Telefonnummer eines lästigen Anrufs Folgendes aufweist:
Erhalten einer Zielanrufdatensatzgruppe, die von Zielanrufdatensätzen gebildet wird, die eine erste verdächtige Telefonnummer enthalten, wobei die erste verdächtige Telefonnummer irgendeine verdächtige Nummer ist, die ein Merkmalswort eines lästigen Anrufs in einem Zielanrufdatensatz der ersten verdächtigen Nummer hat, (4111);
Bestimmen eines Lästigkeitstyps eines Merkmalsworts eines lästigen Anrufs, das in jedem Zielanrufdatensatz in der Zielanrufdatensatzgruppe enthalten ist, gemäß einer Entsprechung zwischen voreingestellten Merkmalsworten für lästige Anrufe und Lästigkeitstypen, wobei der Lästigkeitstyp einen Zweck der lästigen Anrufe der ersten verdächtigen Telefonnummer erkennen lässt, (4112);
Bestimmen des Lästigkeitstyps des Lästigkeitsmerkmalsworts, das in einem Anrufdatensatz enthalten ist, als einen Lästigkeitstyp des Anrufdatensatzes (4113) ;
Zählen der Anzahl von Anrufdatensätzen, die jedem Lästigkeitstyp in der Zielanrufdatensatzgruppe entsprechen (4114) ;
Bestimmen eines Anteils des jeden Lästigkeitstyps in der Zielanrufdatensatzgruppe gemäß einem Verhältnis der Anzahl der Anrufdatensätze, die dem jeden Lästigkeitstyp entsprechen, zu der Gesamtzahl von Anrufdatensätzen in der Zielanrufdatensatzgruppe (4115); und
Bestimmen der ersten verdächtigen Telefonnummer als einer Telefonnummer eines lästigen Anrufs, wenn es in der Zielanrufdatensatzgruppe einen Lästigkeitstyp mit einem größeren Anteil als einer Anteilsschwelle gibt, (4116).

2. Vorrichtung zum Bestimmen der Telefonnummer eines lästigen Anrufs, die Folgendes aufweist:
ein Gruppenerhaltungsmodul (510), das konfiguriert ist zum Erhalten von Zielanrufdatensätzen von wenigstens einem Endgerät, um eine Anrufdatensatzgruppe zu erhalten, wobei die Anrufdatensatzgruppe eine vorbestimmte Anzahl von Zielanrufdatensätzen enthält, wobei die Zielanrufdatensätze jeweils eine unbekannte Nummer und wenigstens ein Schlüsselwort enthalten, wobei das wenigstens eine Schlüsselwort durch das Endgerät gemäß Textdaten von Anrufinhalt eines Anrufs, der mit der unbekannten Nummer getätigt wird, erhalten wird und zum Repräsentieren eines Anrufsthemas der Textdaten des Anrufinhalts ist und wobei die unbekannte Nummer eine Nummer ist, die nicht in einer Kontaktliste des Endgeräts gespeichert ist, das der unbekannten Nummer entspricht, wobei die vorbestimmte Anzahl von Zielanrufdatensätzen mehrere Zielanrufdatensätze aufweist;
ein Nummernerhaltungsmodul (520), das konfiguriert ist zum Erhalten N verdächtiger Nummern in der Anrufdatensatzgruppe, wobei die N verdächtigen Nummern erste N unbekannte Nummern unter unbekannten Nummern sind, die in der vorbestimmten Anzahl von Zielanrufdatensätzen enthalten und gemäß Auftauchhäufigkeit in absteigender Reihenfolge angeordnet sind;
ein Erkennungsmodul (530), das konfiguriert ist zum Erkennen, ob es in Schlüsselwörtern, die in einem Zielanrufdatensatz jeder verdächtigen Nummer enthalten sind, ein Merkmalswort eines lästigen Anrufs gibt, das in einem voreingestellten Wörterbuch aufgezeichnet ist; und
ein Bestimmungsmodul (540), das konfiguriert ist zum Bestimmen, falls es in Schlüsselwörtern, die in einem Zielanrufdatensatz einer verdächtigen Nummer enthalten sind, ein Merkmalswort eines lästigen Anrufs gibt, das in dem voreingestellten Wörterbuch aufgezeichnet ist, dass eine verdächtige Nummer, die das Merkmalswort eines lästigen Anrufs in einem Zielanrufdatensatz der verdächtigen Nummer hat, eine Telefonnummer eines lästigen Anrufs ist, wobei das Bestimmungsmodul (540) **gekennzeichnet ist durch**:
ein Gruppenerhaltungsuntermodul (541), das konfiguriert ist zum Erhalten einer Zielanrufdatensatzgruppe, die von Zielanrufdatensätzen gebildet wird, die eine erste verdächtige Telefonnummer enthalten, wobei die erste verdächtige Telefonnummer irgendeine verdächtige Nummer ist, die ein Merkmalswort eines lästigen Anrufs in einem Zielanrufdatensatz der ersten verdächtigen Nummer hat;
ein Merkmalswortbestimmungs-Untermodul (542) das konfiguriert ist zum Bestimmen eines Lästigkeitstyps eines Merkmalsworts eines lästigen Anrufs, das in jedem Zielanrufdatensatz in der Zielanrufdatensatzgruppe enthalten ist, gemäß einer Entsprechung zwischen voreingestellten Merkmalsworten für lästige Anrufe und Lästigkeitstypen, wobei der Lästigkeitstyp einen Zweck der lästigen Anrufe der ersten verdächtigen Telefonnummer erkennen lässt;
ein Datensatzbestimmungs-Untermodul (543), das konfiguriert ist zum Bestimmen des Lästigkeitstyps des Lästigkeitsmerkmalsworts, das in einem Anrufdatensatz enthalten ist, als einen Lästigkeitstyp des Anrufdatensatzes;
ein Zähluntermodul (544), das konfiguriert ist zum Zählen der Anzahl von Anrufdatensätzen, die jedem Lästigkeitstyp in der Zielanrufdatensatzgruppe entsprechen;
ein Anteilsbestimmungsuntermodul (545), das konfiguriert ist zum Bestimmen eines Anteils des jeden Lästigkeitstyps in der Zielanrufdatensatzgruppe gemäß einem Verhältnis der Anzahl der Anrufdatensätze, die dem jeden Lästigkeitstyp entsprechen, zu der Gesamtzahl von Anrufdatensätzen in der Zielanrufdatensatzgruppe; und
ein Nummernbestimmungsuntermodul (546), das konfiguriert ist zum Bestimmen der ersten verdächtigen Telefonnummer als einer Telefonnummer eines lästigen Anrufs, wenn es in der Zielanrufdatensatzgruppe einen Lästigkeitstyp mit einem größeren Anteil als einer Anteilsschwelle gibt.

3. Computerprogramm mit Anweisungen zum Ausführen der Schritte des Verfahrens zum Bestimmen einer Telefonnummer eines lästigen Anrufs nach Anspruch 1 bei Ausführung des genannten Programms durch einen Computer.

4. Aufzeichnungsmedium, das durch einen Computer lesbar ist und auf dem ein Computerprogramm mit Anweisungen zum Ausführen der Schritte des Verfahrens zum Bestimmen einer Telefonnummer eines lästigen Anrufs nach Anspruch 1 enthält.

## Revendications

1. Procédé de détermination d'un numéro de téléphone malveillant, comprenant :
l'obtention d'enregistrements d'appels cibles depuis au moins un terminal pour obtenir un ensemble d'enregistrements d'appels, dans lequel l'ensemble d'enregistrements d'appels contient un nombre prédéterminé d'enregistrements d'appels cibles, chacun des enregistrements d'appels cibles contient un numéro non familier et au moins un mot-clé, l'au moins un mot-clé est obtenu par le terminal conformément à des données textuelles d'un contenu d'appel d'un appel présentant le numéro non familier et sert à représenter un sujet d'appel des données textuelles du contenu d'appel, et le numéro non familier est un numéro non mémorisé dans une liste de contacts du terminal correspondant au numéro non familier (201), dans lequel le nombre prédéterminé d'enregistrements d'appels cibles comprend une pluralité d'enregistrements d'appels cibles ;
l'obtention de N numéros suspects dans l'ensemble d'enregistrements d'appels, les N numéros suspects étant N premiers numéros non familiers parmi des numéros non familiers qui sont contenus dans le nombre prédéterminé d'enregistrements d'appels cibles et agencés conformément à des fréquences d'apparition dans un ordre décroissant (202) ;
la détection qu'un mot caractéristique malveillant enregistré dans un dictionnaire prédéfini existe ou non dans des mots-clés contenus dans un enregistrement d'appel cible de chaque numéro suspect (203) ; et
si un mot caractéristique malveillant enregistré dans le dictionnaire prédéfini existe dans des mots-clés contenus dans un enregistrement d'appel cible de n'importe quel numéro suspect, la détermination qu'un numéro suspect présentant le mot caractéristique malveillant dans un enregistrement d'appel cible du numéro suspect est un numéro de téléphone malveillant (204),
**caractérisé en ce que**
la détermination qu'un numéro suspect présentant le mot caractéristique malveillant dans un enregistrement d'appel cible du numéro suspect est un numéro de téléphone malveillant comprend :
l'obtention d'un ensemble d'enregistrements d'appels cibles formé par des enregistrements d'appels cibles contenant un premier numéro de téléphone suspect, dans lequel le premier numéro de téléphone suspect est n'importe quel numéro suspect présentant un mot caractéristique malveillant dans n'importe quel enregistrement d'appel cible du premier numéro suspect (4111) ;
la détermination d'un type de malveillance d'un mot caractéristique malveillant contenu dans chaque enregistrement d'appel cible dans l'ensemble d'enregistrements d'appels cibles (4112) conformément à une correspondance entre des mots caractéristiques malveillants et types de malveillances prédéfinis, dans lequel le type de malveillance indique un but de malveillance du premier numéro de téléphone suspect ;
la détermination qu'un type de malveillance du mot caractéristique malveillant contenu dans un enregistrement d'appel est un type de malveillance de l'enregistrement d'appel (4113) ;
le compte du nombre d'enregistrements d'appels correspondant à chaque type de malveillance dans l'ensemble d'enregistrements d'appels cibles (4114) ;
conformément au rapport du nombre des enregistrements d'appels correspondant à chaque type de malveillance sur le nombre total d'enregistrements d'appels dans l'ensemble d'enregistrements d'appels cibles, la détermination d'une proportion de chaque type de malveillance dans l'ensemble d'enregistrements d'appels cibles (4115) ; et
quand un type de malveillance ayant une proportion plus importante qu'un seuil de proportion existe dans l'ensemble d'enregistrements d'appels cibles, la détermination que le premier numéro de téléphone suspect est un numéro de téléphone malveillant (4116).

2. Dispositif de détermination d'un numéro de téléphone malveillant, comprenant :
un module d'obtention d'ensemble (510), configuré pour obtenir des enregistrements d'appels cibles depuis au moins un terminal afin d'obtenir un ensemble d'enregistrements d'appels, dans lequel l'ensemble d'enregistrements d'appels contient un nombre prédéterminé d'enregistrements d'appels cibles, chacun des enregistrements d'appels cibles contient un numéro non familier et au moins un mot-clé, l'au moins un mot-clé est obtenu par le terminal conformément à des données textuelles d'un contenu d'appel d'un appel qui est effectué avec le numéro non familier et sert à représenter un sujet d'appel des données textuelles du contenu d'appel, et le numéro non familier est un numéro non mémorisé dans une liste de contacts du terminal correspondant au numéro non familier, dans lequel le nombre prédéterminé d'enregistrements d'appels cibles comprend une pluralité d'enregistrements d'appels cibles ;
un module d'obtention de numéros (520), configuré pour obtenir N numéros suspects dans l'ensemble d'enregistrements d'appels, les N numéros suspects étant N premiers numéros non familiers parmi des numéros non familiers qui sont contenus dans le nombre prédéterminé d'enregistrements d'appels cibles et agencés conformément à des fréquences d'apparition dans un ordre décroissant ;
un module de détection (530), configuré pour détecter qu'un mot caractéristique malveillant enregistré dans un dictionnaire prédéfini existe ou non dans des mots-clés contenus dans un enregistrement d'appel cible de chaque numéro suspect ; et
un module de détermination (540) configuré pour déterminer, si un mot caractéristique malveillant enregistré dans le dictionnaire prédéfini existe dans des mots-clés contenus dans un enregistrement d'appel cible de n'importe quel numéro suspect, qu'un numéro suspect présentant le mot caractéristique malveillant dans un enregistrement d'appel cible du numéro suspect est un numéro de téléphone malveillant, dans lequel le module de détermination (540) est **caractérisé par** :
un sous-module d'obtention d'ensemble (541), configuré pour obtenir un ensemble d'enregistrements d'appels cibles formé par des enregistrements d'appels cibles contenant un premier numéro de téléphone suspect, le premier numéro de téléphone suspect étant n'importe quel numéro suspect présentant un mot caractéristique malveillant dans n'importe quel enregistrement d'appel cible du premier numéro suspect ;
un sous-module de détermination de mot-clé (542), configuré pour déterminer un type de malveillance d'un mot caractéristique malveillant contenu dans chaque enregistrement d'appel cible dans l'enregistrement d'appel conformément à une correspondance entre des mots caractéristiques malveillants et types de malveillances prédéfinis, dans lequel le type de malveillance indique un but de malveillance du premier numéro de téléphone suspect ;
un sous-module de détermination d'enregistrement (543), configuré pour déterminer le type de malveillance du mot caractéristique malveillant contenu dans un enregistrement d'appel comme étant un type de malveillance de l'enregistrement d'appel ;
un sous-module de comptage (544), configuré pour compter le nombre d'enregistrements d'appels correspondant à chaque type de malveillance dans l'ensemble d'enregistrements d'appels cibles ;
un sous-module de détermination de proportion (545), configuré pour déterminer une proportion de chaque type de malveillance dans l'ensemble d'enregistrements d'appels cibles conformément à un rapport du nombre d'enregistrements d'appels correspondant à chaque type de malveillance sur le nombre total d'enregistrements d'appels dans l'ensemble d'enregistrements d'appels cibles ; et
un sous-module de détermination de numéro (546), configuré pour déterminer que le premier numéro de téléphone suspect est un numéro de téléphone malveillant quand un type de malveillance ayant une proportion supérieure à un seuil de proportion existe dans l'ensemble d'enregistrements d'appels cibles.

3. Programme informatique comportant des instructions pour exécuter les étapes du procédé de détermination d'un numéro de téléphone malveillant selon la revendication 1 quand ledit programme est exécuté par un ordinateur.

4. Support d'enregistrement lisible par un ordinateur et sur lequel est enregistré un programme informatique comportant des instructions pour exécuter les étapes du procédé de détermination d'un numéro de téléphone malveillant selon la revendication 1.
